# EUROPEAN PATENT SPECIFICATION

(11) **EP 0 761 273 B1**
(45) Date of publication and mention of the grant of the patent: **17.10.2001**
(21) Application number: 96305413.5
(22) Date of filing: 24.07.1996
(51) Int. Cl.: B01D 3/22

(54) **Liquid-vapour contact column**
Flüssigkeits-Gas-Kontaktkolonne
Colonne de contact liquide-vapeur

(30) Priority: 28.07.1995 US 508374
(43) Date of publication of application: 12.03.1997
(73) Proprietor: THE BOC GROUP, INC., Murray Hill, New Providence, New Jersey 07974 (US)
(72) Inventor: Potthoff, Richard W., Scotch Plains, New Jersey 07076 (US); Burton, Alan C., Scotch Plains, New Jersey 07076 (US)
(74) Representative: Wickham, Michael

(56) References cited:
- BE-A- 674 013
- FR-A- 2 119 425
- GB-A- 817 579
- US-A- 3 464 679

## Description

The present invention relates to a liquid-vapour contact column having a plurality of trays supported within an outer tubular shell (i.e. a vessel of cylindrical or other shape) to contact liquid and vapour phases with one another.

Liquid-vapour contact columns are used in distillation applications. Other applications include heat exchange and absorption of a gas in liquid. In liquid-vapour contact columns, trays are supported within the column in order to contact gaseous and liquid phases, for example, phases of a mixture to be distilled. In the cryogenic distillation of air, as a vapour phase ascends within a column, it becomes progressively more enriched in nitrogen. As the liquid phase descends within the column, it becomes progressively more concentrated in oxygen. There are different types of tray designs that are useful in contacting liquid and vapour phases together. Commonly, in cryogenic air separation, sieve trays are used. Also used are bubble cap and expanded metal trays. Columns with expanded metal trays are known from eg GB-A-817 579.

Downcomers are used to conduct a descending liquid phase from tray to tray, within the column. Liquid flows from each downcomer onto an inlet portion of an associated tray and then across an active portion of the tray where liquid-vapour contact occurs. The liquid is then discharged from an outlet portion of the tray to the next downcomer. Vapour ascending the column passes through apertures provided in the active portion of each tray. The vapour thus comes into contact with the liquid phase on the tray and typically forms the liquid phase into a froth.

Columns according to the pre-characterising part of claim 1 are knowm from eg US-A-3 464 679 or FR-A-2 119 425.

The flow pattern of the vapour phase, as viewed from tray to tray, interacts with flow pattern of the liquid phase. The vapour does not pass through the liquid, on a tray at right angles to the tray, but rather, it is deflected at an angle to the tray, in the direction of the liquid flow. When trays are spaced relatively close together, instead of continuing the ascent to the next tray at this angle, a counterflow pattern or path develops in which the vapour phase reverses direction. As a result there is a pressure gradient in the horizontal direction, with the highest pressure at the liquid outlet portion of the tray. This in turn produces a higher hydraulic gradient of liquid in order to overcome this pressure gradient and as result, froth heights are higher near the liquid inlet. Moreover, the counter flowing vapour may carry entrained liquid backwards which increases the liquid load on the tray towards the inlet portion of the tray. This can lead to premature flooding of the tray. The resultant higher hydraulic gradient may also lead to weeping near the liquid inlet which causes the mass transfer efficiency to deteriorate because the weeping liquid by-passes two trays.

The present invention provides a distillation column in which the trays are arranged to reduce the vapour cross-flow by straightening the counterflow path of the vapour phase between trays, thus allowing smaller tray spacings and more compact distillation column designs.

According to the invention, a liquid-vapour contact column comprises an outer tubular shell, a plurality of downcomers and a plurality of trays supported within the outer tubular shell to intimately contact an ascending vapour phase with a descending liquid phase. Each of the trays has an inlet portion for receiving the descending liquid phase, an outlet portion for discharging the descending liquid phase, and an active portion connecting the inlet and outlet portions. The active portion has openings through which the ascending vapour phase contacts the descending liquid phase flowing across the tray from the inlet to the outlet. The active portions of the trays are staggered such that their upstream ends are closer to the outer tubular shell then their down stream ends, to inhibit the ascending vapour phase from flowing in a counterflow direction with respect to said liquid phase flowing across said trays.

The flow of liquid deflects the ascending vapour phase initially in a direction of the liquid flow. In a conventional arrangement, the vapour phase is then constrained to flow in the opposite direction to the liquid flowing across the tray. As a result there is a higher hydraulic gradient, liquid entrainment in the vapour, and premature flooding. By staggering the trays according to the present invention, the vapour phase tends to flow in its initial deflected flow path through the liquid to prevent or inhibit flow of the ascending vapour through a counterflow path.

Liquid-vapour contact columns according to the invention will now be described with reference to the accompanying drawings, in which:
Figure 1 is a schematic, cross-sectional view of a part of a conventional liquid-vapour contact column;
Figure 2 is a corresponding schematic cross-sectional view of part of a liquid-vapour contact column in accordance with the present invention;
Figure 3 is a corresponding schematic cross-sectional view of part of an alternative liquid-vapour contact column in accordance with the present invention.

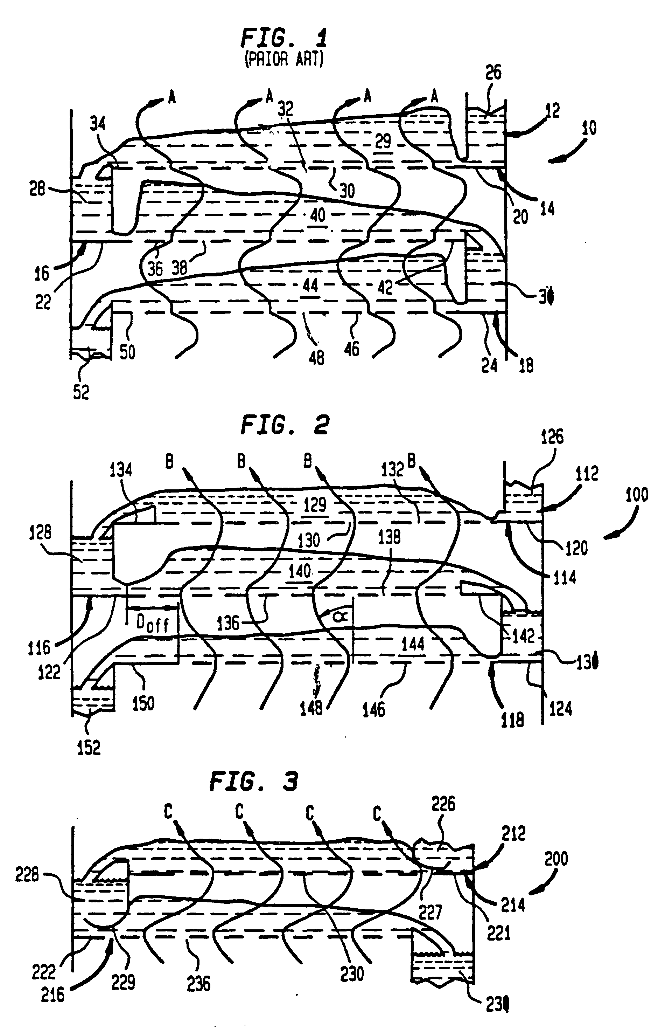

With reference to Figure 1, a liquid-vapour contact column 10 has an outer tubular shell 12 (preferably of cylindrical configuration) and trays 14, 16 and 18 supported within tubular shell 12. For reason of ease of illustration, only trays 14, 16, and 18 are shown and typically there are a large number of trays within liquid-vapour contact column 10. Trays 14, 16 and 18 are respectively provided with inlet portions 20, 22 and 24. Liquid descends through downcomers 26, 28 and 31 and flows onto the respective inlet portions 20, 22 and 24 of trays 14, 16 and 18. Liquid flows from right to left on tray 14, left to right on tray 16, and then right to left on tray 18.

Liquid 29 enters inlet portion 20 of tray 14 through downcomer 26. It then flows across an active portion 30 of tray 14. Active portion 30 has openings or perforations 32 to allow the ascending vapour phase to mix with liquid 29 on active portion of tray 14. Liquid 29 flows from active portion 30 to an outlet portion 34 of tray 30 and flows into downcomer 28 of tray 16. Liquid from downcomer 28 flows onto inlet portion 22 of tray 16 and then over active portion 36, provided with perforations 38 to enable the ascending vapour phase to mix with liquid, designated by reference numeral 40. Liquid 40 flows across active portion 36 to outlet portion 42 of tray 16. Liquid 40 overflows outlet portion 42 into downcomer 31 and then enters tray 18 on inlet portion 24. The liquid on tray 18, designated by reference numeral 44, flows across an active portion 46 thereof. Active portion 46 is provided with perforations 48 to enable the ascending vapour phase to contact liquid 44. Liquid 44 after having flowed across active portion 46 is discharged from an outlet portion 50 of tray 18 to downcomer 52.

As the ascending vapour phase, designated by the letter A, passes through liquid 44, it is deflected from right to left, in the direction of flow of the liquid phase. The path taken by the vapour is represented by stream lines A in Figure 1. If the trays are set at a sufficiently close distance to one another, which is desirable in order to keep down the height of the column, in order for the vapour to reach openings 38 of active portion of tray 36, the vapour reverses its direction and flow in a counterflow direction, opposite to the flow of liquid 44. This creates a pressure gradient in the horizontal direction with the highest pressure at outlet portion 50 of tray 18. A higher hydraulic gradient of liquid is necessary to overcome this pressure gradient which results in a higher froth height at the inlet end of the tray. As the vapour phase flows in a counterflow direction, between trays, there can exist liquid entrainment, carrying the liquid backward to increase the liquid flow in the tray. This can lead to premature flooding. The high hydraulic gradient may also lead to weeping of the tray near liquid inlet 24.

With reference to Figure 2, a liquid-vapour contact column 100 is illustrated having an outer tubular shell 112 and a plurality of trays 114, 116 and 118 supported within tubular shell 112. Downcomers 126, 128, and 131 conduct the liquid phase to entrance portions 120, 122 and 124 respectively of the respective trays 114, 116 and 118. Liquid 129 flows across an active portion 130 of tray 114 having openings 132 and is discharged from outlet portion 134 to downcomer 128. Tray 116 is provided with active portion 136 having perforations 138 to enable the vapour phase to mix with liquid 140 of the liquid phase flowing across tray 116. Liquid 140 is discharged from tray 116 from outlet portion 142 into downcomer 131. Liquid 144 on tray 118 flows across active portion 146. Perforations 148 are defined in active portion 146 to allow the vapour phase to ascend through tray 118 and mix with liquid 144 of the liquid phase flowing across tray 118. Liquid 144 is discharged from an outlet portion 150 of tray 118 into a downcomer 152 the next succeeding underlying tray.

The ascending vapour phase is deflected in the direction of flow of the liquid phase but does not reverse direction in order to reach active portions of successively higher trays because trays 114, 116, 118, and therefore their active portions, are staggered at an offset distance D_{off}. Thus, the staggering of the active portions inhibits vapour flow in a counterflow direction. The path taken by the vapour is indicated by stream lines B in Figure 2. The angle α is illustrated in Figure 2 in relation to one of the stream lines B in the vicinity of the tray 118. As illustrated, stream lines B are deflected at an angle alpha with, the vertical by the flowing liquid. Applying simple geometry it can be seen that D_{off} should be set approximately equal to a product of the tray spacing and tan(α). Tan(α) can be calculated from equation 1 below. More precisely, D_{off} is given by equation 2 below.$\text{tanα =} \frac{\text{L}}{\text{V}} \text{.} \frac{{\text{ρ}}_{\text{V}}}{{\text{ρ}}_{\text{L}}} \text{.} \frac{{\text{l}}_{\text{tr}}}{{\text{h}}_{\text{fr}} \text{ε}} \text{.} \text{c}$${\text{D}}_{\text{off}} \text{=} {\text{(h}}_{\text{trsp}} {\text{- h}}_{\text{fr}} \text{.ε)} \text{. tan α}$ where hₜᵣₛₚ = tray spacing; L/V = liquid to vapour ratio (mass ratio); ρᵥ = vapour density; ρ_{L} = liquid density; lₜᵣ = active tray length; c = froth velocity profile shape factor (c = 1 for plug flow, c = 2 for a linear velocity profile (constant acceleration of vapour in the horizontal direction)); ε = froth density (volumetric liquid fraction); and h_{fr} = froth height.

The calculated value for D_{off} is an indicator of the strength of the cross flow effect. Often it is not necessary to compensate for this effect completely, e.g., using only half of the calculated offset would reduce the horizontal pressure gradient by 50% and prevent a reversed vapour flow and backward entrainment of liquid.

If liquid-vapour contact column 100 is compared with liquid vapour contact column 10 it can be seen that column shell 112 has a larger diameter than column shell 12 due to the staggering of the trays contained within column shell 112. With reference to Figure 3, a liquid-vapour contact column 200 is shown which has a column shell 212 of a diameter equal or at least close to that of the liquid-vapour contact column shown in Figure 1. As in the previous embodiment, trays 214 and 216 are staggered and as illustrated, streamlines C of the ascending vapour phase do not flow in the counterflow direction due to such staggering.

The diameter of column shell 212 is reduced (as compared with column shell 112) by reducing the size of the inactive tray area below. Downcomers 226 and 228, which supply liquid to trays 214 and 216, partially cover or overlie respective active portions 230 and 236 thereof. In order to prevent the liquid leaving the downcomers from passing through the respective active portions 230 and 236, downcomers 226 and 228 are provided with depending, curved diffuser sections 227 and 229, respectively, which curve inwardly into an overlying position with respect to the regions of active portions 230 and 236 that lie under the respective downcomer and with respect to regions of the respective inactive inlet portions 221 and 222. This arrangement increases the velocity of liquid introduced onto the trays and thus reduces the pressure of such liquid over the said underlying regions of the active portions 230 and 236 to prevent liquid from weeping therefrom. The diffuser-like profile of diffuser sections 227 and 229 acts to recover the pressure of the liquid so that the liquid flows across the remainder of active portions 230 and 236. The liquid leaves the active portion 236 of the tray 216 and flows into the downcomer 231.

## Claims

1. A liquid-vapour contact column (100; 200) comprising:
an outer tubular shell (112; 212); and
a plurality of trays (114, 116, 118; 214, 216) supported within said tubular shell (112; 212) to intimately contact an ascending vapour phase with a descending liquid phase;
a plurality of downcomers (126, 128, 131; 226, 228, 231);
each of said trays (114, 116, 118; 214, 216) having an inlet portion (120, 122, 124; 221, 222) for receiving said descending liquid phase, an outlet portion (134, 142, 150) for discharging the liquid phase, and an active portion (130, 136, 146; 230, 236) connecting said inlet (120, 122, 124; 221, 222) and outlet (134, 142, 150) portions and having openings (132, 138, 148) therethrough to enable said vapour phase to contact the liquid phase flowing across the tray from the inlet to the outlet portion thereof;
said active portions (130, 136, 146; 230, 236) of said trays (114, 116, 118; 214, 216) being staggered,
**characterised in that** the active portions (130, 136, 146; 230, 236) are staggered such that their upstream ends are closer to the outer tubular shell (112; 212) than their downstream ends, whereby to inhibit said ascending vapour phase from flowing in a counterflow direction with respect to said liquid phase flowing across said trays.

2. A liquid-vapour contact column according to claim 1, wherein each of said trays comprises a sieve tray.

3. A liquid-vapour contact column according to claim 1 or claim 2, wherein each downcomer (214, 216) has a depending, inwardly curved diffuser section (227, 229) overlying part of said active portion of the tray below.

## Patentansprüche

1. Flüssigkeits-Dampf-Kontaktsäule (100; 200) mit:
einem äußeren Rohrgehäuse (112; 212), und
einer Mehrzahl von Böden (114, 116, 118; 214, 216), die in dem Rohrgehäuse (112; 212) gehaltert sind, um eine aufsteigende Dampfphase mit einer absteigenden Flüssigkeitsphase in innige Berührung zu bringen,
einer Mehrzahl von abwärts führenden Rohren (126, 128, 131; 226, 228, 231),
wobei jeder der Böden (114, 116, 118; 214, 216) einen Einlaßteil (120, 122, 124; 221, 222) zur Aufnahme der absteigenden Flüssigkeitsphase, einen Auslaßteil (134, 142, 150) zum Abführen der Flüssigkeitsphase, und einen aktiven Teil (130, 136, 146; 230, 236) aufweist, der den Einlaßteil (120, 122, 124; 221, 222) und den Auslaßteil (134, 142, 150) verbindet und Durchtrittsöffnungen (132, 138, 148) aufweist, um die Dampfphase in Berührung mit der Flüssigkeitsphase kommen zu lassen, die vom Einlaßteil zum Auslaßteil über den Boden strömt,
wobei die aktiven Teile (130, 136, 146; 230, 236) der Böden (114, 116, 118; 214, 216) gestaffelt angeordnet sind,
**dadurch gekennzeichnet, daß** die aktiven Teile (130, 136, 146; 230, 236) derart gestaffelt angeordnet sind, daß ihre stromaufwärtigen Enden näher am äußeren Rohrgehäuse (112; 212) liegen als ihre stromabwärtigen Enden, so daß die aufsteigende Dampfphase an einer Strömung in Gegenstromrichtung mit Bezug auf die über die Böden strömende Flüssigkeitsphase gehindert wird.

2. Flüssigkeits-Dampf-Kontaktsäule nach Anspruch 1, wobei jeder der Böden einen Siebboden umfaßt.

3. Flüssigkeits-Dampf-Kontaktsäule nach Anspruch 1 oder 2, wobei jedes abwärtsführende Rohr (214, 216) einen hängenden, einwärts gekrümten Diffusorabschnitt (227, 229) aufweist, der den aktiven Teil des darunterliegenden Boden teilweise überdeckt.

## Revendications

1. Colonne (100 ; 200) de contact liquide-vapeur comprenant :
une enveloppe extérieure tubulaire (112 ; 212) ; et
une pluralité de plateaux (114, 116, 118 ; 214, 216) en appui à l'intérieur de ladite enveloppe tubulaire (112 ; 212) destinés à mettre en contact étroit une phase vapeur ascendante avec une phase liquide descendante ;
une pluralité de déversoirs (126, 128, 131 ; 226, 228, 231) ;
chacun desdits plateaux (114, 116, 118 ; 214, 216) ayant une section d'entrée (120, 122, 124 ; 221, 222) pour recevoir ladite phase liquide descendante, une section de sortie (134, 142, 150) pour décharger la phase liquide, et une section active (130, 136, 146 ; 230, 236) reliant lesdites sections d'entrée (120, 122, 124 ; 221, 222) et de sortie (134, 142, 150) et ayant des ouvertures (132, 138, 148) la traversant pour permettre à ladite phase vapeur d'entrer en contact avec la phase liquide s'écoulant à travers le plateau de ladite section d'entrée à la ladite section de sortie de celui-ci ;
lesdites sections actives (130, 136, 146 ; 230, 236) desdits plateaux (114, 116, 118 ; 214, 216) étant décalées en quinconce,
***caractérisée en ce que*** les sections actives (130, 136, 146 ; 230, 236) sont décalées en quinconce de telle sorte que leurs extrémités amont soient plus proches de l'enveloppe tubulaire extérieure (112 ; 212) que leurs extrémités aval, de manière à empêcher que la phase vapeur ascendante ne s'écoule dans une direction à contre-courant par rapport à ladite phase liquide s'écoulant à travers lesdits plateaux.

2. Colonne de contact liquide-vapeur selon la Revendication 1, dans laquelle chacun desdits plateaux comprend un plateau perforé.

3. Colonne de contact liquide-vapeur selon la Revendication 1 ou la Revendication 2, dans laquelle chaque déversoir (214, 216) possède une section de diffusion (227, 229) suspendue, incurvée vers l'intérieur surplombant une partie de ladite section active du plateau situé au-dessous.
